(19) **Europäisches Patentamt**

**European Patent Office**

**Office européen des brevets**

(11) **EP 1 465 035 A2**

(12) **EUROPEAN PATENT APPLICATION**

(43) Date of publication:
06.10.2004 Bulletin 2004/41

(51) Int Cl.7: **G05B 23/02**, G05B 13/04

(21) Application number: **04251266.5**

(22) Date of filing: **04.03.2004**

| | |
|---|---|
| (84) Designated Contracting States:<br>**AT BE BG CH CY CZ DE DK EE ES FI FR GB GR**<br>**HU IE IT LI LU MC NL PL PT RO SE SI SK TR**<br>Designated Extension States:<br>**AL HR LT LV MK** | (72) Inventors:<br>• **Kothare, Simone L.**<br>  **Bethlehem, PA 18017 (US)**<br>• **Lu, Yaohui**<br>  **Emmaus, PA 18049 (US)**<br>• **Mandler, Jorge Anibal**<br>  **Fogelsville, PA 18051 (US)** |
| (30) Priority: **11.03.2003 US 385915** | |
| (71) Applicant: **AIR PRODUCTS AND CHEMICALS,**<br>**INC.**<br>**Allentown, PA 18195-1501 (US)** | (74) Representative: **Freeman, Avi**<br>**W.H. Beck, Greener & Co.,**<br>**7 Stone Buildings,**<br>**Lincoln's Inn**<br>**London WC2A 3SZ (GB)** |

(54) **Constrained system identification for incorporation of a priori knowledge**

(57)    An exemplary method of improving an initial parametric model of a system by the incorporation of a priori knowledge of the system. The initial parametric model of the system is a model including a plurality of parameters based on analysis of a plurality of input signals and a plurality of output signals. The method includes the steps of determining a set of constraints corresponding to a set of the plurality of parameters and based on the a priori knowledge and then performing a constrained parametric optimization of the system based on the initial parametric model and the set of determined constraints to produce an improved parametric model of the system. The constrained parametric optimization of the initial parametric model does not include the plurality of input signals and the plurality of output signals.

FIG. 1

**Description**

The present invention relates to a method of improving an initial parametric model of a system and a method of system identification based analysis of a plurality of input signals and a plurality of output signals.

In embodiments, this invention relates to system identification wherein a priori knowledge of the system is used during model parameter estimation and, more particularly, to system identification of chemical processes using a priori knowledge of the processes.

In creating a model of a given system, for example designing a model-based controller for that system based on the created model, one may desirably utilize first-principles knowledge, empirical data, or a combination of both. First-principles knowledge may be obtained from a number of first-principles analyses of the system, such as mass and energy balances based on fluid dynamics and thermodynamic and kinetic information of the system. Analysis of empirical data is an alternative way of modeling the process and is generically known as system identification.

One approach is to create a model based on first-principles knowledge and then fit certain parameters (such as kinetic or thermodynamic parameters) to closely match empirical data collected from the system. This approach starts with the creation of a first-principles based model (also known as white box model) and, through a stochastic framework, testing data is used for estimation of the unknown parameters and/or structures of the model (such as, e. g., chemical reaction rates or coefficients, stoichiometry of reactions, reaction mechanisms, etc). This approach creates a so-called hybrid model or *semi-physical* model. Proposed methods to implement this approach have been described in detail in articles such as Identification of Physical Parameters in Structured Systems by S. Dasgupta et al. in Automatica (1988) and Modeling Chemical Processes Using Prior Knowledge and Neural Networks by M. Thompson in AICHE Journal (1994). These methods require considerable first-principles knowledge of the process, which may not be available in most complex industrial applications. Therefore, this hybrid modeling approach may suffer from the same deficiencies as the white box modeling approach.

Empirical models based on empirical data from the system may be used when it is difficult to obtain sufficient first-principles knowledge of the process or when rigorous models may not be required (such as in the case of using the models for robust model-based controllers). However, in some cases it may be desirable to utilize some first-principles knowledge of the process along with the empirical data to create the model of the system, even when there is not enough first-principles knowledge to model the entire system. In these cases, it is desirable to use enough first-principles knowledge to reduce the effects of noise in the empirical data on the model, which may lead to 'unrealistic' results. Depending on the amount of first-principles knowledge, it may be desirable to build a model based on empirical data and then change the resulting model to more closely match known first-principles knowledge of the system.

The empirical system test data is used to create a *black-box* model. Then first-principles knowledge is incorporated into the black-box model. This approach is known as grey box identification. A number of articles have described possible methods of grey-box identification, such as: J. Abonyi et al., Incorporating Prior Knowledge in Fuzzy Model Identification, International Journal of Systems Science (2000); T. Johansen, Identification of Non-linear Systems Using Empirical Data and Prior Knowledge - an Optimization Approach, Automatica (1996); W. Timmons et al., Parameter-constrained Adaptive Control, Ind. Eng. Chem. Res. (1997); and H. Tulleken, Grey-box Modelling and Identification Using Physical Knowledge and Bayesian Techniques, Automatica, (1993).

For ease of illustration of these grey-box methods, a general formulation of the constrained statistical optimization for identification of parametric models in the context of auto-regressive exogenous (ARX) models may be useful.

A compact form of representation of an ARX model is

$$y(k|\theta) = \theta\phi(k) + v(k) \qquad\qquad \text{Equation 1}$$

with

$$\theta = \begin{bmatrix} A_1 & A_2 & \cdots & A_{na} & B_1 & B_2 & \cdots & B_{nb} \end{bmatrix}, \qquad \phi(k) = \begin{bmatrix} y(k-1) \\ y(k-2) \\ \vdots \\ y(k-na) \\ u(k-1) \\ u(k-2) \\ \vdots \\ u(k-nb) \end{bmatrix}$$

$$\text{Equation 2}$$

where u, y, v are the input, output and noise vectors, respectively; *na, nb* are output and input horizons that represent the effect of past input/output data on the output at the current time step *k* and the matrix θ contains the model parameters.

If the error vector *v(k)* is assumed to be zero mean, the estimated output *y^(k)* can be written as

$$\overset{\wedge}{y}(k|\theta) = E(y(k|\theta))= \theta\phi(k) \qquad \text{Equation 3}$$

If the calculation of θ is posed as the optimization problem:

$$\overset{\wedge}{\theta}{}^{LS}_{N}=argminV_N(\theta,Z^N) \qquad \text{Equation 4}$$

where the following quadratic term of predicted errors is used:

$$V_N(\theta, Z_N) = \frac{1}{N}\sum_{k=1}^{N}\frac{1}{2}\epsilon^T\Lambda^{-1}\epsilon$$

Equation 5

with ε = *y* - *y^* and $Z_N$ being the set of input/output data, the optimal solution is obtained by using the least squares method analytically as in <u>System Identification - Theory for the User</u> by L. Ljung, Prentice Hall PTR 2$^{nd}$ ed. (1999). In the case of an ARX model, the optimal solution is given by

$$\hat{\theta}^{LS}_N = \left[\frac{1}{N}\sum_{k=1}^{N}\phi(k)\Lambda^{-1}\phi(k)^T\right]^{-1}\frac{1}{N}\sum_{k=1}^{N}\phi(k)\Lambda^{-1}y(k)$$

Equation 6

In grey box system identification approaches, constraints representing a priori knowledge of the system are added to the optimization problem in Equation 4, and can be in equality or inequality form

$$M\theta = K$$

$$L\theta \leq C \qquad \text{Equation 7}$$

where *M, K, L,* and *C* are matrices of appropriate dimensions representing the desired constraints on the model parameters θ.

In his article, H. Tulleken discusses how utilization of a priori knowledge in system identification has become an increasingly important research area because such knowledge can improve the model quality and potentially eliminate the need for collection of additional data during plant testing. Improvements in model quality may not only enhance controller design but process monitoring, fault detection and process optimization as well.

Grey-box modeling traditionally solves a statistical optimization where plant test data is fit subject to constraints (a priori knowledge). The main research issues exploited in the literature are centered on what type of a priori knowledge should be considered, how to judge the quality of the a priori knowledge and how to incorporate the knowledge as constraints on the parameters of the empirical models during the data fitting process.

Perhaps the most significant study on the use of a priori knowledge in the identification of chemical processes can be found in <u>Grey-box Modelling and Identification Using Physical Knowledge and Bayesian Techniques</u> by H. Tulleken. This study was limited to parametric Auto Regressive Moving Average eXogenous (ARMAX) models for single-input single-output (SISO) systems. The main conclusion of this work was that a considerable variance reduction could be achieved at the cost of a small increase in the bias of the parameter estimates when a priori knowledge was considered. Physical knowledge, such as open-loop stability of the model and sign of the steady-state gain, was used in this work. These types of a priori knowledge were transformed into a series of linear inequality constraints that were introduced in the parameter estimation process. The open-loop stability constraints for two-dimensional first-order AR systems is represented by

$$y_k + Ay_{k-1} = y_k + \begin{bmatrix} a_{11} & a_{12} \\ a_{21} & a_{22} \end{bmatrix} y_{k-1} = 0$$

Equation 7

Additionally, this work discusses constraints on the steady-state gains.

A similar type of work can be found in Parameter-constrained Adaptive Control by W. Timmons et al., where constrained identification of SISO models for biomedical systems was performed. Pseudolinear ARMAX or nonlinear auto-regressive moving average exogenous (NARMAX) models for multiple-input single-output (MISO) systems were also considered. These models were also estimated in ARMAX form using constrained optimization methods. For example, constraints on the range of parameters are considered:

$$\theta_{min} \leq \theta \leq \theta_{max} \qquad \qquad \text{Equation 8}$$

or on the process steady-state gains

$$K_{min} \leq K \leq K_{max} \qquad \qquad \text{Equation 9}$$

which can be transformed into constraints on the parameters of $\theta$. For example, for SISO systems, the steady-state gains are equal to

$$K = \frac{\sum_i b_i}{1 - \sum_i a_i} \qquad \qquad \text{Equation 10}$$

Notice that matrices A, B in Equation 2 become vectors a, b for SISO systems.

In W. Timmons et al., open-loop stability for second order SISO systems is imposed through the following constraints

$$a_1 + a_2 \leq 1 \qquad -a_1 + a_2 \leq 1 \qquad -a_2 \leq 1 \qquad \text{Equation 11}$$

In the same work the settling time, $T_{ss}$, for a second order SISO system is enforced in the following way

$$T_{ss}a_1 + a_2 \leq T_{ss}^3 \qquad -T_{ss}a_1 + a_2 \leq T_{ss}^2 \qquad -a_2 \leq T_{ss}^0 \qquad \text{Equation 12}$$

Other pieces of work in the area include: Identification of Non-linear Systems Using Empirical Data and Prior Knowledge - an Optimization Approach by T. Johansen, which dealt with nonlinear auto-regressive exogenous models (NARX) for MISO) systems; and Incorporating Prior Knowledge in Fuzzy Model Identification by J. Abonyi et al., which used a fuzzy technique to build a Takagi-Sugeno model, which is a linear parameter varying model type (rather than the traditional linear time invariant models usually considered).

In Incorporating Prior Knowledge in Fuzzy Model Identification, a priori knowledge is incorporated via a fuzzy technique and a fuzzy model identification approach is proposed. The same technique is used to enforce process gains, stability, settling time and nonlinearity. The model is in Takagi-Sugeno format. Therefore, the resulting model is a linear parameter-varying model versus the traditional linear time-invariant model.

In Identification of Non-linear Systems Using Empirical Data and Prior Knowledge - an Optimization Approach, a NARMAX model represented by

$$y(t) = f(\phi(t\text{-}1)) + e(t) \qquad \text{Equation 13}$$

where

$$\phi(t\text{-}1) = (y(t\text{-}1,\cdots,y(t\text{-}n_y);u(t\text{-}1),\cdots,u(t\text{-}n_u),e(t\text{-}1),\cdots,e(t\text{-}n_e)] \qquad \text{Equation 14}$$

is subject to the following open-loop stability constraints

$$-1 < \frac{\partial f}{\partial y(t\text{-}1)}(\bar{y},\bar{u}) < 1 \qquad \text{Equation 15}$$

where $(y\text{-}, u\text{-})$ is the point at which the derivative is evaluated.

It is noted therefore that a substantial body of work on grey box modeling can be found in the literature. However, one of the shortcomings of all the aforementioned methods is the fact that the resulting computational complexity of the optimization where parameters of empirical models are fit to plant test data subject to constraints representing a priori knowledge may become prohibitive with increasing system and data size. This has been identified as a limitation to the applicability of the constrained system identification techniques in the literature. W. Timmons et al., for example, comment, "A more serious concern, however, is that the development and conversion of a priori knowledge into suitable linear constraints may be problematic for high-order and nonlinear systems." H. Tulleken notes that, "Higher order models could not reasonably compromise between parameterization load (too many parameters) vs. the information available (a relatively short and noisy experiment)." T. Johansen comments on the application of his proposed technique. "The computational complexity may limit its applicability. This problem will in particular be apparent when the dimension of the information space is high, or there are non-linear operators or parameterizations involved."

An extension of the previous works to MIMO (multi-input multi-output) systems can be found in a McMaster University doctoral thesis, Control Relevant Model Identification with Prior Knowledge by A. Esmaili. This work focuses on incorporation of a priori knowledge in the estimation of non-parametric models for medium-sized MIMO systems. In particular, Esmaili focuses on finite impulse response (FIR) model structures. The constraints incorporated into the parameter estimation are specific for this type of model structure. The emphasis of this work is not on the formulation of the optimization to obtain the model parameters under a priori knowledge constraints. Rather, the author focuses on measuring the quality of the controller that results based on the obtained models. The controller quality is judged based on a stability criterion in the presence of model uncertainty. Prior to this work, no literature could be found that dealt with incorporation of a priori knowledge in MIMO model identification for the purpose of control of chemical processes.

It is important to emphasize that Esmaili deals with small to medium size problems for which constrained least squares and sequential quadratic programming are adequate optimization methods for obtaining the model parameters. The methods described by Esmaili may not be practical for developing a parameter estimation method suitable for large-scale MIMO problems due to the resulting computational complexity.

More recently, W. Van Brempt et al. reports development of commercial software for model optimization in A High Performance Model Predictive Controller: Application On A Polyethylene Gas Phase Reactor, Control Engineering Practice (2001). The authors disclose a reduction in the total implementation cost of a model predictive controller (MPC) which is achieved via utilization of a priori knowledge of the process. The system identification is done in parallel on the plant for the high frequency behavior and on a rigorous model of the process for the slow dynamics. This means that the authors aim at capturing the high frequency behavior of the plant through plant testing and the steady-state behavior from a first-principles model. They show application of the technique to a polyethylene gas phase reactor.

This commercial software is described in greater detail in the course notes by T. Backx et al. from INCA Course: Course on Model Predictive Control given at IPCOS 1999-2001. The authors disclose a method of first identifying an FIR model based only on test data. The model is then approximated by a parametric state-space model in order to reduce the number of model parameters and the model is used as an initial guess in a nonlinear optimization for parameter estimation again using the test data. A priori knowledge may be incorporated in this nonlinear optimization. Thus, the main modification with respect to previously available techniques is the identification of an initial model to be used as initial guess in the data fitting step that may include a priori knowledge. The initial model is only used as an initial guess for the nonlinear optimization. It is not part of the model optimization formulation. Another modification seems to be the way in which a priori knowledge may be incorporated in the model optimization step. Steady-state gains are not enforced through constraints, as in previous works, but rather they are weighted in the optimization criterion. Also, zero transfers may be enforced in different steps of the system identification procedure and time delays may be automatically approximated at process inputs and outputs.

In light of the previous discussion, it is noted that a common element in the prior art is that the constrained optimization involves analysis of the original test data. The solution of a constrained statistical optimization is performed, wherein the test data fitting process is subject to a priori knowledge, either in the form of constraints and/or as additional terms in the objective function.

According to a first aspect of the present invention, there is provided an exemplary method of improving an initial parametric model of a system by the incorporation of a priori knowledge of the system. The initial parametric model of the system is a model including a plurality of parameters based on analysis of a plurality of input signals and a plurality of output signals. The method includes the steps of determining a set of constraints corresponding to a set of the plurality of parameters and based on the a priori knowledge and then performing a constrained parametric optimization of the system based on the initial parametric model and the set of determined constraints to produce an improved parametric model of the system. The constrained parametric optimization of the initial parametric model does not include the plurality of input signals and the plurality of output signals.

According to a second aspect of the present invention, there is provided an exemplary method of system identification based analysis of a plurality of input signals and a plurality of output signals with the incorporation of a priori knowledge of a system for developing a physically meaningful model of the system. The method includes the step of solving a first parametric model optimization based on the plurality of input signals and the plurality of output signals to create an initial parametric model of the system. The initial parametric model of the system includes a plurality of parameters. A set of constraints is determined, which correspond to a set of the plurality of parameters from the initial parametric model based on the a priori knowledge of the system. A constrained parametric optimization of the system is performed based on the initial parametric model and the set of determined constraints to produce a physically meaningful model of the system. The constrained parametric optimization does not include the plurality of input signals and the plurality of output signals.

According to a third aspect of the present invention, there is provided an alternative exemplary method of system identification based analysis of a plurality of input signals and a plurality of output signals with the incorporation of a priori knowledge of a system for developing a physically meaningful model of the system. The method includes the step of solving a first non-parametric model optimization based on the plurality of input signals and the plurality of output signals to create a non-parametric model of the system. The non-parametric model is then approximated as an initial parametric model of the system, which includes a plurality of parameters. A set of constraints is determined, which correspond to a set of the plurality of parameters from the initial parametric model based on the a priori knowledge of the system. A constrained parametric optimization of the system is performed based on the initial parametric model and the set of determined constraints to produce a physically meaningful model of the system. The constrained parametric optimization does not include the plurality of input signals and the plurality of output signals.

According to a fourth aspect of the present invention, there is provided another exemplary method of system identification based analysis of a plurality of input signals and a plurality of output signals with the incorporation of a priori knowledge of a system for developing a physically meaningful model of the system. The method includes the step of solving a first non-parametric model optimization based on the plurality of input signals and the plurality of output signals to create an initial non-parametric model of the system. The non-parametric model includes a plurality of model parameters. A set of constraints is determined, which correspond to a set of the plurality of model parameters from the initial non-parametric model based on the a priori knowledge of the system. A constrained non-parametric optimization of the system is performed based on the initial non-parametric model and the set of determined constraints to produce a physically meaningful model of the system. The constrained non-parametric optimization does not include the plurality of input signals and the plurality of output signals.

Examples of embodiments of the present invention will now be described in detail with reference to the accompanying drawings, in which:

Figure 1 is a block diagram illustrating the layout of an exemplary system test for system identification according to an example of an embodiment of the present invention.

Figure 2 is a high level flowchart illustrating an exemplary method of system identification using a priori system knowledge according to an example of an embodiment of the present invention.

Figure 3 is a flowchart illustrating an exemplary method of initial model identification according to an example of an embodiment of the present invention.

Figure 4 is a flowchart illustrating an exemplary method of constrained optimization using a priori system knowledge according to an example of an embodiment of the present invention.

Figure 5 is a flowchart illustrating an alternative exemplary method of initial model calculation according to an example of an embodiment of the present invention.

Figure 6 is a flowchart illustrating an alternative exemplary method of system identification using a priori system knowledge according to an example of an embodiment of the present invention.

Examples of embodiments of the present invention include an exemplary system identification method for construction of a model that represents a system. Such models may be used to design a model-based controller (such as an MPC), a monitoring system, a fault detection system, reverse engineering of a system or process, and/or a process optimization tool. More specifically, in preferred embodiments the present invention consists of a method of system identification, which incorporates both empirical data and a priori knowledge of the system wherein at least two model parameter optimizations are solved. The first unconstrained optimization generates an initial model based entirely on system test data information. This initial model may then be optimized in the presence of a priori knowledge constraints. The final model is, therefore, obtained in at least two model parameter optimization steps.

This model is desirably an optimal compromise between system test data information and a priori knowledge of the processes within the system. The execution of the system identification in at least two optimization steps allows for handling of any size system and data set in a computationally efficient manner. Additionally, in an example of an embodiment the present invention focuses on a system identification approach in which an empirical model is modified not only to match first-principles knowledge, but any kind of a priori knowledge of the process which may be available (from process operation, for example).

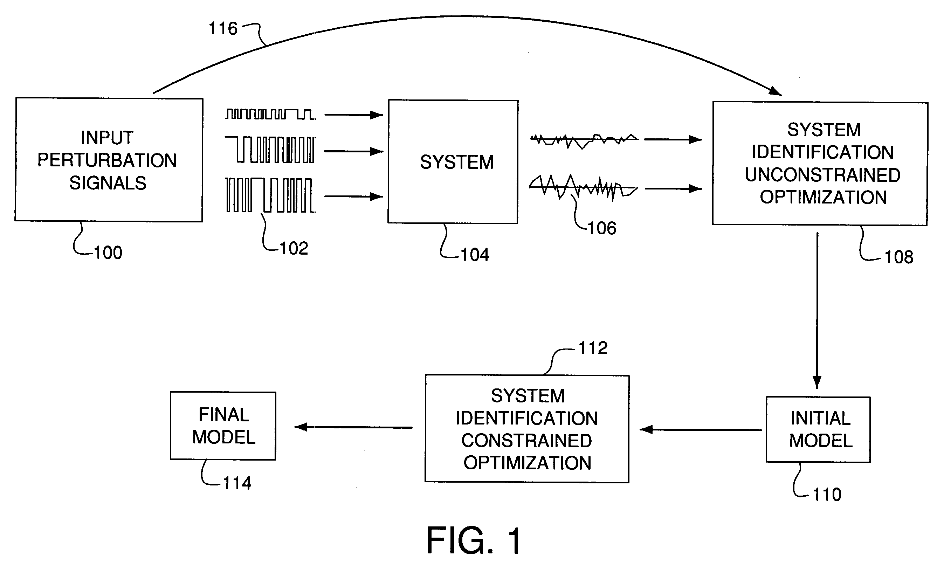

The block diagram of Figure 1 illustrates an exemplary layout of a system test and analysis procedure. In the following descriptions, system 104 is described generally in terms of a chemical plant. This choice is for illustrative purposes only. One skilled in the art may appreciate that the exemplary optimization methods described below need not be limited to system identification of a chemical plant, but may be utilized to generate models for other complex systems from input/output data, such as electronic circuitry, communications networks, and financial structures.

The exemplary system test involves driving a number of input channels of system 104 with input perturbation signals 102. The amplitudes and waveforms of input signals 102 are desirably determined to provide sufficient excitation of the system in the desired portions of the parameter space so that the resulting model may reproduce the desired responses of the system. Much work has been done on the problem of how to design these input signals. A number of types of signals have been utilized, such as step signals, pseudo-random binary and multi-level signals, and binary multi-frequency signals. European patent application having publication number EP-A-1391990 entitled "Method and Apparatus for Producing Perturbation Signals" (based on US Patent Application 10/225,675,) describes several exemplary methods of designing input perturbation signals, and is herein incorporated by reference.

Data representing the amplitudes of input perturbation signals 102 and data representing the signal shapes, such as the time delays between the binary levels for binary signals, is supplied to signal generators 100. Assuming that system 104 is operated near its normal operating conditions at the time of plant testing, input signals 102 provide data regarding deviations from the values of the input variable from these normal operating conditions. Output signals 106 from the output channels of system 104 are measured by sensors and transferred along with data representing input signals 102, which is supplied to system identification unconstrained optimization procedure 108 from signal generators 100 on data channel 116 to determine initial model 110.

Data transfer in Figure 1 is characterized as transmission over a data channel for ease of illustration, but it is contemplated that the data transfer may alternatively be accomplished via a computer download or the physical transfer of memory devices such as tape, disk, or IC recording media. The data transfer may also involve entering settings on the signal generators manually from printed or electronically transmitted information. It is also noted that, although Figure 1 illustrates three input signals 102 and two output signals 106, the choice of these numbers is only for ease of representation. The reduced computational complexity of the exemplary methods of the present invention allow systems having much greater numbers of both input and output signals to be efficiently identified.

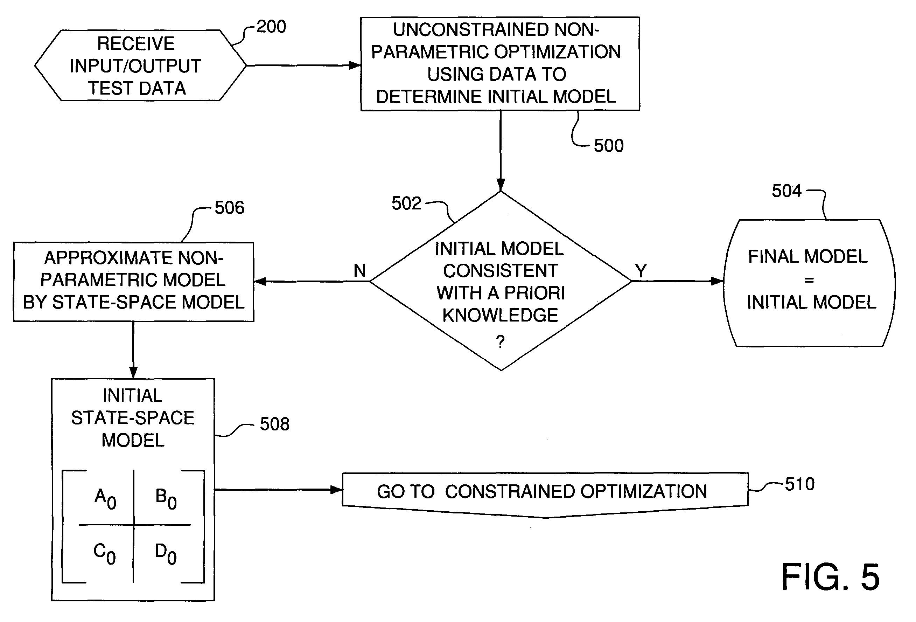

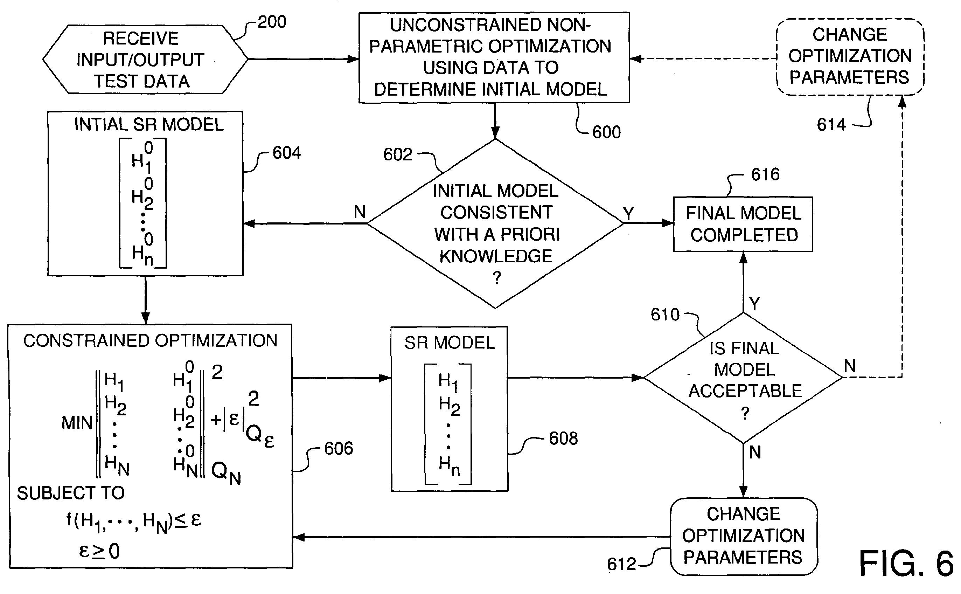

Desirably, using physical insight into the system, the output channels may be separated into sets of highly interacting output channels. The sets of highly interacting output channels contain output signals of the system that exhibit a significant degree of interdependence. Data from these channels are preferably analyzed together using a MIMO state-space identification method or an ARX algorithm. Data from output channels exhibiting less interaction with other output channels may be analyzed separately using simpler multiple input/single output (MISO) linear parametric models (state-space, ARX, ARMAX, output-error, Box-Jenkins, Output-error, etc.). In the discussion below a MIMO state-space model is generally used for illustrative purposes. One of the reasons for adopting a state-space model structure in this discussion is the fact that this is the most general linear parametric model structure that encompasses all others linear parametric models and may be used to represent any linear system. It is contemplated that non-parametric models may be used as well, as described below with regard to Figures 5 and 6.

Initial model 110 desirably provides an accurate characterization of the system test data. As shown in Figure 1, initial model 110, but not data directly representing input signals 102 or output signals 106, is used as the input data to system identification constrained optimization 112. System identification constrained optimization 112 adjusts initial model 110 based on a priori knowledge of the system in order to produce final model 114. This constrained optimization seeks to achieve a desirably optimal compromise between empirical test data information and a priori knowledge of system 104.

It is contemplated that the methods described carried below to achieve this desirably optimal compromise may be carried out within a general purpose computer system instructed to perform these functions by means of a computer-readable medium. Such computer-readable media include; integrated circuits, magnetic and optical storage media, as well as audio-frequency, radio frequency, and optical carrier waves. Alternatively, special purpose computing circuitry may be employed as a computer to perform these functions.

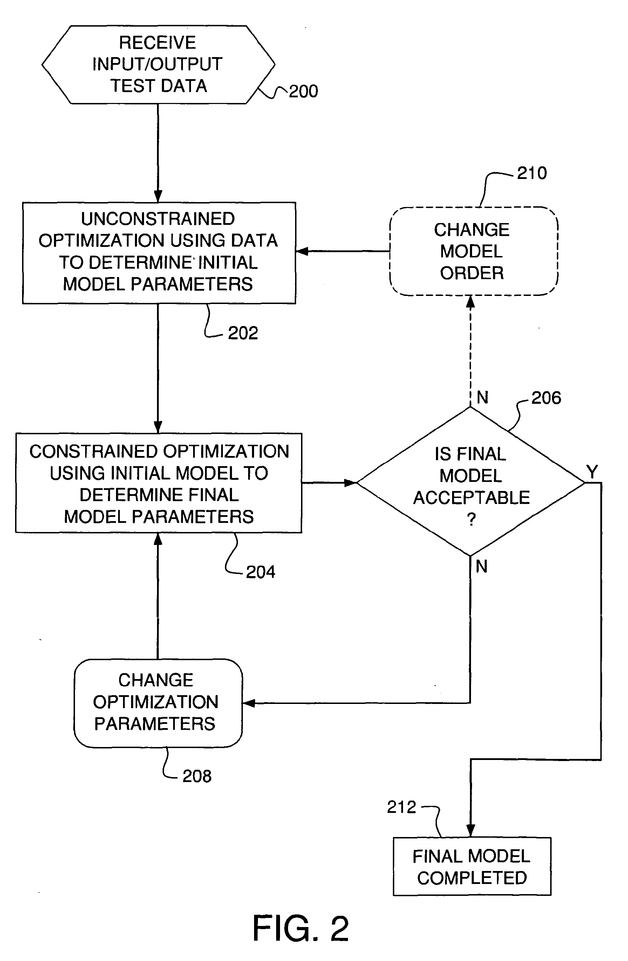

One exemplary embodiment of the present invention, described in the high-level flowchart of Figure 2, is a method of system identification utilizing a priori knowledge. This exemplary method determines a parametric model of the system that represents a compromise between empirical test data and a priori knowledge of the system.

In Figure 2, input and output test data from a plant test are received, step 200. The plant test may be executed with any input perturbation signals that provide enough excitation to the system to produce the desired responses. The input/output data may be pre-treated prior to system identification by methods such as filtering, detrending, outlier elimination, interpolation, slicing, etc. Exemplary methods of data pre-treating that may be used are disclosed in US Patent Application 10/225,675.

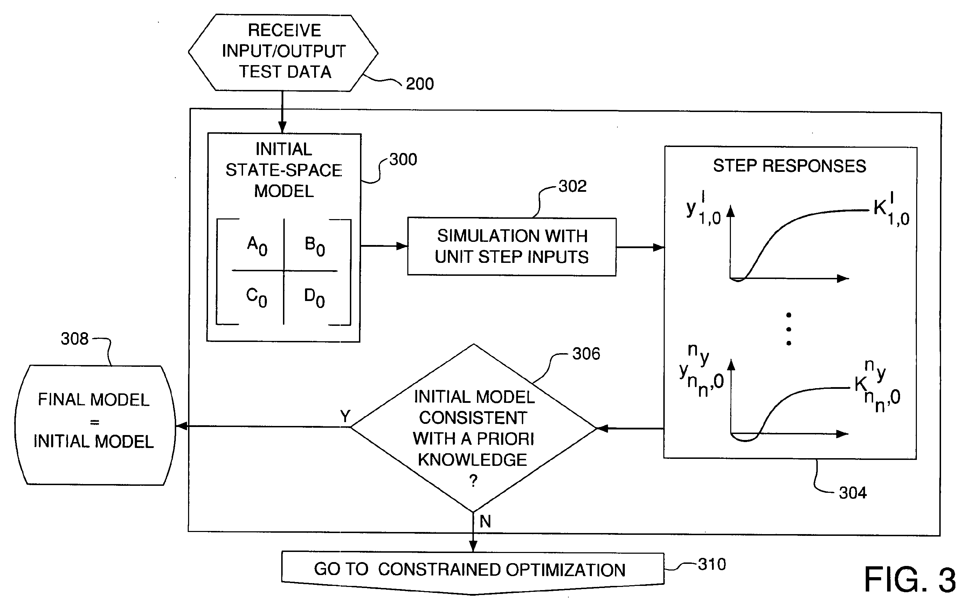

An unconstrained optimization using the input and output data is performed to determine an initial parametric model of the system, step 202. The input and output test data may be analyzed using either a parametric, as described below with reference to Figure 3, or a non-parametric model which may then be converted into a parametric model, as described below with reference to Figure 5, to obtain the initial parametric model. This modeling may be performed using standard modeling tools commercially available for unconstrained system identification, such as MATLAB® as described by L. Ljung in System Identification Toolbox, for Use with MATLAB®, version 5 ed. (2000) herein incorporated by reference. Alternatively, a special purpose program may be written to perform unconstrained system identification based on a standard model structure.

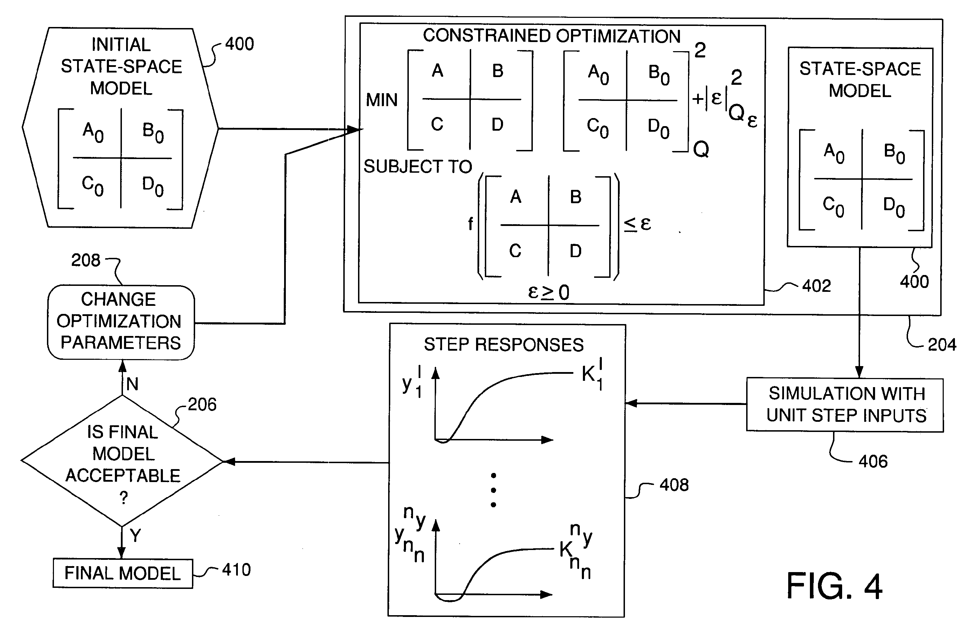

The resulting initial model may be judged to ensure that it is a good quality model within usual model quality criteria for model validation and cross-validation. See System Identification -Theory for the User by L. Ljung for exemplary methods. The initial model is then used as an input to a constrained parametric optimization, step 204. In this optimization, described in detail below with reference to Figure 4, a new parametric model of the same type and number of parameters or coefficients as the initial parametric model is identified subject to constraints that represent a priori knowledge of the process.

The constrained parametric optimization, step 204, does not utilize the input/output data directly, but only indirectly via the initial parametric model. Thus, the model identification is performed via solution of at least two sequential optimization processes, represented in steps 202 and 204. The first optimization, step 202, may be a standard system identification procedure for unconstrained parametric model estimation. The second optimization, step 204, seeks to adjust the model in order to achieve the desired optimal compromise between test data information and a priori knowledge. This two-step approach involves two relatively computationally simple optimization steps. This is one of the key differences with respect to the prior art wherein the model is identified during the data fitting process, in the presence of constraints, in one computationally expensive step.

It is noted that, although the exemplary system identification process shown in Figure 2 includes two optimization steps, it may be understood by one skilled in the art that these steps may be subdivided and/or the overall number of steps may be increased.

The model calculated by the constrained parametric optimization, step 204, may be judged to determine whether it represents an acceptable compromise between the test data and a priori knowledge of the system, step 206. If this model is not an acceptable compromise, the optimization parameters in the constrained parametric optimization may be changed to achieve more desirable results, step 208, and then the constrained parametric optimization, step 204, may be performed again. If the model is accepted, it becomes the final model, step 212.

If the model calculated by constrained parametric optimization, step 204 is judged not to be acceptable in step 206, it is also possible to change the model order of the initial model, step 210 (shown in phantom), and repeat the unconstrained system identification, step 202. This may produce a new initial model representing a system characterized by a different number of parameters or coefficients, for example.

Figure 3 is a flowchart of an exemplary constrained parametric optimization that may be used as the first step, step 202, of the exemplary two-step system identification approach described above with respect to Figure 2. In Figure 3, the use of an unconstrained parametric optimization technique, such as a state-space model, to obtain the initial parametric model is described.

As in Figure 2, first input and output test data from a plant test are received, step 200. It is desirable for pre-treated input/output data to be used in this unconstrained system identification procedure. A standard system identification method for a chosen model structure may be used. Figure 3 utilizes a state-space model for system identification. As described above, one of the reasons for adopting a state-space model structure in this discussion is the fact that this is the most general linear parametric model structure that encompasses all others (ARX, ARMAX, Box-Jenkins, Output-error, etc) and may be used to represent any linear system. It may be understood, however, that the use of state-space models in the discussion of Figure 3 is not a limitation of the present invention and modifications for use of other parametric model structures are within the level of ordinary skill in the art.

The input data and the output data may be analyzed to determine an initial state-space model, step 300, using a standard commercially available software package. For example, the subspace identification routine *N4SID* in MATLAB® may be used for this purpose as described in System Identification Toolbox, for Use with MATLAB®. Special purpose software programs may also be written to perform this unconstrained parametric optimization. Exemplary subspace identification methods are discussed in detail in System Identification -Theory for the User by L. Ljung and Subspace Identification For Linear Systems: Theory - Implementation - Applications by P. Van Overschee et al. (1996). This first step in the system identification procedure generates an initial state-space model, which may be represented in discrete form as:

$$x_0(k + 1) = A_0 x_0(k) + B_0 u(k) + w(k)$$

$$y_0(k) = C_0 x_0(k) + D_0 u(k) + v(k)$$

$$x_0(0) = x_0 \text{known} \qquad\qquad\qquad \text{Equation 16}$$

where $x_0(k)$ are the internal states of dimension n, $y_0(k)$ are the output variables of dimension $n_y$, $u(k)$ are the input variables of dimension $n_u$, $w(k)$ represent state disturbances and $v(k)$ constitute the measurement noise at sample k. The matrices $[A_0, B_0, C_0, D_0]$ characterize the model dynamics and, in this exemplary system identification of a state-space model, their elements are the unknown parameters to be estimated via knowledge of data of output variables y and input variables u.

The exemplary state-space model of Equation 16 may be represented compactly as:

$$\left[ \begin{array}{c|c} A_0 & B_0 \\ \hline C_0 & D_0 \end{array} \right] , \qquad\qquad \text{Equation 17}$$

as shown in step 300 in Figure 3.

Standard techniques for identification of a subspace model may warn the user if the resulting model is open-loop unstable. If a priori knowledge of the system indicates that the process is open-loop stable, it may be desirable for the user to exercise caution in selecting an initial model which is open-loop stable, i.e. it is preferable to select initial models for which the eigenvalues of matrix $A_0$ lie inside the unit circle.

Step responses 304 corresponding to the initial state-space model determined in step 300 may then be obtained via simulation of the model subject to unit step inputs, step 302. The step responses 304 display the dynamic and steady-state characteristics of the initial state-space model. In the exemplary step responses 304 shown in Figure 3, there are $n_y n_u$ step responses and the symbols $y^i_{j,0}$, $K^i_{j,0}$ correspond to the $i^{th}$ output response and corresponding steady-state gain for a unit step in the $j^{th}$ input, with $i = 1, \dots, n_y$ and $j = 1, \dots, n_u$. The sub-index $0$ indicates that these step responses correspond to the initial state-space model determined in step 300.

The step responses 304 may be visually inspected against a priori knowledge of the process, step 306. If the initial state-space model is in agreement with a priori knowledge of the process, the system identification exercise is concluded and the initial state-space model is determined to be the final model, step 308. If the a priori knowledge is not corroborated by the collected input/output data, the system identification procedure continues, step 310, with the second, constrained optimization, step 204 of Figure 2.

Figure 4 is flowchart illustrating an exemplary method of performing a constrained parametric optimization of an initial state-space model produced by an unconstrained parametric optimization procedure, such as the procedure described above with reference to Figure 3. An initial state-space model that has been judged to be unsatisfactory given the a priori knowledge of the process is used as the input, step 400. The initial state-space model is used in a constrained optimization procedure, step 204. A priori knowledge is incorporated in the form of constraints on the model parameters.

The optimization is shown in a simplified form in step 402 where the decision variables are the new state-space model parameters, namely, the elements of the matrices $A$, $B$, $C$, $D$. For reason of simplicity, in the description below only the case in which the matrix $D$ is set to 0 is considered, i.e., the formulation of the constrained optimization in 301 is shown for causal systems. It may be understood to one skilled in the art that the method described may be used for non-causal systems as well, with minor changed in problem formulation and a small increase in computational complexity.

The objective function in constrained parametric optimization 402 may assume, for example, the following form:

$$\min_{A,B,C,\epsilon} \; \| A - A_0 \|^2_{Q_A} + \| B - B_0 \|^2_{Q_B} + \| C - C_0 \|^2_{Q_C} + \| \epsilon \|^2_{Q_\epsilon}$$

Equation 17

where the positive semi-definite matrices $Q_A$, $Q_B$, $Q_C$ are weights that define the matrix norms in the objective function and represent the degree of change that the matrices A, B, C are allowed to display with respect to matrices $A_0$, $B_0$, $C_0$, which contain the input/output data information. The notation $\|A-A_0\|_{QA}$ is equivalent to $[(A-A_0)^T Q_A (A-A_0)]^{1/2}$. The other weighted norms shown are calculated similarly.

The variable $\epsilon \geq 0$ represents an additional decision variable that introduces relaxation or softening of constraints within a penalty function approach. J. Nocedal et al., in <u>Numeric Optimization</u> from the Springer Series in Operations Research (1999), disclose this method of relaxing constraints within a numeric optimization procedure. In other words, $\epsilon$ represents the extent of violation of the constraints representing a priori knowledge of the system allowed for the final model. This is the reason why the weighted norm of $\epsilon$ is minimized in the objective function. Therefore, $Q_\epsilon$ is the weight that controls violation of constraints in this exemplary optimization procedure.

The optimization problem, step 402 in Figure 4, may be solved for a given set of parameters $Q_A$, $Q_B$, $Q_C$, $Q_\epsilon$ $\geq 0$ and exemplary constrained model 404 may be obtained. The resulting constrained model is simulated with unit step inputs, step 406. If the step responses 408 obtained from simulating the model in step 406 are judged to be an acceptable compromise between a priori knowledge and data information, step 206, this is the final model 410. If the final model determined in step 204 is judged not to be acceptable in step 206, one possible method of improving the final model to provide a better compromise between the input/output test data information and a priori knowledge of the system may be to adjust the elements of $Q_\epsilon$, step 208, thereby softening or hardening the constraints imposed on the parameters in the constrained parametric optimization. The constrained parametric optimization, step 204, may then be reevaluated to produce a new final model.

Additionally, in the exemplary objective function, matrices $Q_A$, $Q_B$, $Q_C$ are adjustable parameters in the optimization and may be changed if the resulting model 404 is not judged to be an acceptable compromise between input/output data information (represented by matrices $A_0$, $B_0$, and $C_0$) and a priori knowledge of the system in step 206. The parameters $Q_A$, $Q_B$, $Q_C$ determine how much the newly estimated model parameters are allowed to deviate from the initial model parameters in lieu of the imposed constraints. Therefore, the user may choose different set of optimization parameters $Q_A$, $Q_B$, $Q_C$, $Q_\epsilon$ in step 208 and re-solve optimization problem 402. As described with regard to Figure 2 above, the user may alternatively choose a different model order, for example, and re-estimate an initial model.

Other forms of the objective function may utilize different differentiable or non-differentiable matrix norms such as the *2*-norm or the *1*-norm or $\infty$-norm. The objective function may also be modified to account for less degrees of freedom. One may choose, for example, to forcing $A=A_0$ and $C=C_0$ and while leaving the elements of $B$ as decision variables. This could be accomplished with the exemplary formulation by setting $Q_A = 0$ and $Q_C = 0$. That other conceivable forms of the objective function for a state-space or any other parametric model may be used as well may be understood by one of ordinary skill in the art.

The constraints to which the minimization of exemplary objective function may be subject to in step 402 include: constraints on open-loop stability; constraints on steady-state gains; and constraints on the dynamic characteristics of the model. Each of these exemplary categories of constraints is described below in detail.

If the process is known to be open-loop stable, then a constraint on open-loop stability may be desirable. This stability constraint imposes the constraint that the real parts of the eigenvalues of matrix A are within the unit circle. Matrix $A_0$ satisfies this constraint if the initial model was desirably chosen to be open-loop stable. Therefore,

$$eig(A) \leq 1 \qquad \qquad \text{Equation 18}$$

for stable open-loop systems and

$$eig(A) < 1 \qquad \qquad \text{Equation 19}$$

for asymptotically stable open-loop stable systems.

Another category of constraints that may commonly be imposed on the constrained model is a constraint on steady-state gains. The steady-state gains K of the model (a matrix of dimension $n_y n_u$), as a function of the model parameters, are given by

$$K = C(I-A)^{-1} B \qquad \qquad \text{Equation 20}$$

Any linear equality or inequality constraints on the steady-state gains in Equation 20 may be handled in this formulation of the constrained optimization problem. For example, one may impose bounds on the range of the gains,

$$K_{min} \leq C(I-A)^{-1} B \leq K_{max} \qquad \qquad \text{Equation 21}$$

and/or on the signs of the gains, and/or linear combinations of the gains of the various input/output pairs.

Another category of constraint is constraints on the dynamic characteristics of the model. Using the state-space model representation in Equation 15 and replacing $A_0, B_0, C_0, D_0$ with $A, B, C, 0$, one gets the following output response for $N$ sampling intervals:

$$y(k) = Cx(k)$$

$$y(k + 1) = Cx(k + 1) = C(Ax(k) + Bu(k)) = CAx(k) + CBu(k)$$

$$y(k + 2) = Cx(k + 2) = C(Ax(k + 1) + Bu(k +1)\} = CA^2 x(k) + CABu(k) + CBu(k + 1)$$

$$...$$

$$y(k + N) = CA^N x(k) + CA^{N-1} Bu(k) + \cdots + CBu(k + N -1) \qquad \qquad \text{Equation 22}$$

If $x(0) = x_0 = 0$, the following unit step response is obtained:

$$y(k+i) = C(A^{i-1} + A^{i-2} + \cdots + A + I)B \qquad \qquad \text{Equation 23}$$

for $i = 0, \dots, N$.

Thus, one may impose limits on the unit step response at different time intervals. For example, if the time delay $t_d$ of a particular output in response to a unit step on a given input is known, it may be imposed, for example, as:

$$y_j^i(k + I) = [C(A^{I-1} + A^{I-2} + \cdots + A + I)B]_{i,j} = 0, \text{ for } i=0,\dots, t_d$$

$$y_j^i(k + I) = [C(A^{I-1} + A^{I-2} + \cdots + A + I)B]_{i,j} > 0, \text{for } i = t_d+1, \dots, N \qquad \qquad \text{Equation 24}$$

or

$$y_j^i(k + l) = [C(A^{l-1} + A^{l-2} + \cdots + A + I)B]_{i,j} = 0, \text{ for } l = 0, \ldots, t_d$$

$$y_j^i(k+l) = [C(A^{l-1} + A^{l-2} + \cdots + A + I)B]_{i,j} < 0, \text{ for } l = t_d + 1, \ldots, N \qquad \text{Equation 25}$$

where the notation $y_j^i$ means the $i^{th}$ output in response to a unit step change in the $j^{th}$ input and $[C(A^{1-1} + A^{1-2} \ldots + A + I)B]_{i,j}$ represents the corresponding matrix elements.

More generically, the a priori knowledge constraints may assume the following exemplary form:

$$\Lambda \begin{bmatrix} CB \\ C(A+I)B \\ C(A^2+A+I)B \\ \vdots \\ C(A^{(N-2)} + \ldots + A + I)B \\ C(I-A)^{-1}B \end{bmatrix} \leq \Gamma + \epsilon$$

$$\epsilon \geq 0$$

$$eig(A) \leq 1 \qquad \qquad \text{Equation 26}$$

where matrices

$$\Lambda \in \mathfrak{R}^{N\,ny\,x\,N\,n\,y}$$

and

$$\Gamma \in \mathfrak{R}^{N\,ny\,x\,nu}$$

are chosen to represent linear combinations of the step responses and enforce dynamic and steady-state constraints.

$$\varepsilon \in \mathfrak{R}^{N\,ny\,x\,nu}$$

represents the constraint softening parameters. Matrix $Q_\varepsilon$ in the objective function of Equation 17 may be selected to enforce some constraints more strongly than others. Some constraints may be made into hard constraints (by choosing correspondingly large elements in $Q_\varepsilon$), others may be softened to allow for a compromise between data information and a priori knowledge and/or satisfaction of higher priority constraints (i.e. constraint ranking).

The maximum size of the exemplary optimization with the objective function of Equation 17 and the constraints of Equation 26 is:

$$n^2 + n(n_y + n_u) + Nn_yn_u \qquad \text{Equation 27}$$

The exact size depends on the number of dynamic constraints to be enforced, which in turn affects the dimension of $\varepsilon$. If $n_c$ is the number of constraints imposed on the model step responses, the size of the optimization is, therefore, given by:

$$n^2 + (n_y + n_u) + n_c n_y n_u \qquad \text{Equation 28}$$

which may be significantly smaller than the maximum optimization size represented in Equation 27.

While the first $N\ n_y\ n_u$ constraints in Equation 26 are shown to be linear matrix inequalities of the model parameters, it is noted that nonlinear matrix inequalities may also be used. Nonlinear matrix inequalities may be the way in which certain a priori knowledge translates into model parameters. It is also noted that, if these constraints are nonlinear functions of the matrices A, B, C, then the optimization may become considerably more complex.

Figure 5 is a flowchart that illustrates an alternate exemplary method of calculating an initial parametric model as part of the exemplary system identification method of Figure 2. As in the exemplary method of Figure 3, first the input and output test data information is received for analysis.

In the exemplary method of Figure 5, the data is initially used for identification of a non-parametric model, such as an FIR model, a step response (SR) model, or a frequency response model, step 500. One advantage of initially identifying a non-parametric model versus a parametric model is that no structure is necessarily imposed on the model a priori. A disadvantage, however, is the potentially large number of model parameters which may have to be estimated within the non-parametric model, especially for systems with a long settling time. In order to obtain a desirably high quality non-parametric model it is generally desirable to begin in step 200 with a large amount of informative plant data.

The resulting unconstrained non-parametric model is validated according to standard model validation and cross-validation criteria. Assuming that a desirably high quality non-parametric model according to these criteria may be identified in step 500, the model is judged against a priori knowledge, step 502, to determine whether this first model is consistent with the a priori knowledge. If the unconstrained non-parametric model is judged to be satisfactory in step 502, then this initial model may be used as the final. Alternatively, the input/output relationships determined in this model are approximated by a parsimonious parametric model such as, for example, a state-space model, if a parametric model is desired as the final model.

If the unconstrained non-parametric model is judged not to be consistent with the a priori knowledge in step 502, then this initial non-parametric model is approximated by a parsimonious parametric model, step 506. The result of this step is the initial parametric model 508. This exemplary approximation is shown as resulting in initial state-space model 508 in Figure 5, but it is contemplated that other types of parametric models may be adopted as well. The initial parametric model may then be used in a constrained parametric system identification process as described above in detail with reference to Figure 4.

Approximating the initial non-parametric model by a parametric model reduces the number of model parameters to be estimated as part of the constrained parametric system identification process. This simplifies the model optimization subject to a priori knowledge, which is generally more computationally complex than the initial unconstrained system identification.

It is emphasized that, unlike the technique described in the course notes from the INCA Course by T. Backx et al., the initial parametric model determined by the exemplary method of Figure 5 (or the exemplary method of Figure 3) is used in the exemplary constrained parametric system identification process of the present invention as part of the formulation of the model optimization and not only as an initial guess. Furthermore, the exemplary constrained parametric system identification process described above with reference to Figure 4 does not involve the use of plant test data. Data is represented in this constrained parametric optimization by its characterization through the initial parametric model produce by the exemplary method of Figure 5 (or Figure 3).

Another difference with respect to course notes from INCA Course: Course on Model Predictive Control given at IPCOS 1999-2001 is that in examples of embodiments of the present invention a priori knowledge is incorporated in the model optimization step in the form of a combination of hard/soft constraints. In these course notes, T. Backx et al. incorporate steady-state knowledge, for example, as weighted terms in the objective function.

The flowchart of Figure 6 illustrates an alternative exemplary embodiment of the present invention in which a constrained non-parametric model of the system may be identified.

Input/output plant test data are received as in the exemplary parametric embodiments described above, step 200. This plant test data is used for identification of an initial non-parametric model such as, for example, a step response model, step 600, using standard algorithms for non-parametric modeling. In an exemplary case utilizing a step response model, this initial non-parametric model may be written as follows:

$$y_{k+i} - y_k = \sum_{l=1}^{i} H_{i-l+1}^0 \Delta u_{k+l-1}, \ i = 1, \dots, N$$

<div align="right">Equation 29</div>

with $u_{k+i}=0$ for $i < -1$. $N$ is the number of samples that characterize the process settling time. This parameter is selected by the user and may be adjusted to provide a desirably high model quality. The model may be characterized by the following matrix:

$$\begin{bmatrix} H_1^0 & 0 & 0 & 0 & \cdots & 0 \\ H_2^0 - H_1^0 & H_1^0 & 0 & 0 & \cdots & 0 \\ H_3^0 - H_2^0 & H_2^0 - H_1^0 & H_1^0 & 0 & \cdots & 0 \\ \vdots & \vdots & \vdots & \vdots & \vdots & \vdots \\ H_N^0 - H_{N-1}^0 & H_{N-1}^0 - H_{N-2}^0 & H_{N-2}^0 - H_{N-3}^0 & H_{N-3}^0 - H_{N-4}^0 & \cdots & H_1^0 \end{bmatrix} \in \Re^{n_y N \times n_u N}$$

Equation 30

with

$$H_i^0 \in \Re^{ny \ \times \ nu}$$

for *i=1 . . . ,N*.

In Figure 6, the initial model is represented in compact form 604. The initial non-parametric model has been validated and cross-validated against plant data using standard validation and cross-validation criteria, to ensure a desirably high quality initial model. After an initial model is determined to be of desirably high quality according to these criteria, it is judged against a priori knowledge of the system to determine if the initial model is consistent with this a priori knowledge, step 602. If the initial non-parametric model is consistent with the a priori knowledge of the system, then the system identification exercise is terminated and the final model is determined to be the initial model identified from plant data in step 600.

If the initial non-parametric model identified in step 600 is not consistent with the a priori knowledge of the system, then a constrained non-parametric model optimization is performed, step 606. A priori knowledge is enforced as part of this constrained non-parametric model optimization procedure in the form of constraints on the model parameters. As in the case with constrained parametric modeling, described above with reference to Figure 4, the initial model 604 represents the test data information in the constrained optimization 606. Therefore, no test data is directly input into this constrained model optimization step. This is a key difference between examples of embodiments of the present invention and the prior art on the subject of system identification with incorporation of a priori knowledge for both parametric and non-parametric modeling techniques.

An exemplary objective function for the constrained non-parametric model optimization procedure of step 606 is given by:

$$\min_{H_1,\ldots,H_N,\varepsilon^*} \left\| \begin{array}{c} H_1 \\ H_2 \\ \vdots \\ H_N \end{array} - \begin{array}{c} H_1^0 \\ H_2^0 \\ \vdots \\ H_N^0 \end{array} \right\|_{Q_H}^2 + \| \varepsilon^* \|_{Q_{\varepsilon^*}}^2$$

Equation 31

where the positive semi-definite matrices $Q_H$ and $Q_{\varepsilon^*}$ are adjustable parameters that indicate how much the new step response coefficients may differ from those of the initial model (confidence in the data) and how tightly the a priori knowledge constraints are to be enforced (confidence in the a priori knowledge), respectively.

Similar to $\varepsilon$ and $Q_\varepsilon$ in the exemplary constrained parametric optimization procedure described above with reference to Figure 4, the role of the added decision variables $\varepsilon^*$ is to soften the constraints while $Q_{\varepsilon^*}$ may be chosen to establish the degree of softening that is desired for the various constraints.

An exemplary representation of the constraints to which the optimization with exemplary objective function in Equation 31 may be subject is as follows:

$$\Lambda^* \begin{bmatrix} H_1 \\ H_2 - H_1 \\ H_3 - H_2 \\ \vdots \\ H_N - H_{N-1} \end{bmatrix} \leq \Gamma^* + \epsilon^*$$

$$\epsilon^* \geq 0$$

Equation 32

where

$$\Lambda^* \in \mathcal{R}^{n_y N \times n_y N}$$

and

$$\Gamma^* \in \mathcal{R}^{n_y N \times n_u}$$

are the matrices that characterize the a priori knowledge constraints on the model coefficients $H_i$, $i=1 \ldots ,N$. For this exemplary formulation with the objective function given in Equation 31 and the constraints given in Equation 32 the maximum problem size is therefore given by:

$$2n_y n_u N \qquad\qquad \text{Equation 33}$$

The actual problem size for $n_c$ a priori knowledge constraints is given by:

$$n_y n_u (N+n_c) \qquad\qquad \text{Equation 34}$$

which may be significantly smaller than the maximum problem size given in Equation 33.

While the first $N\, n_y\, n_u$ constraints in Equation 32 are shown to be linear matrix inequalities on the model parameters, it is noted that nonlinear matrix inequalities may also be used if this is the way in which a priori knowledge translates into model coefficients. If these constraints are nonlinear functions of the step response coefficients the optimization may become considerably more complex.

Once the constrained optimization of step 606 has been solved, the resulting constrained non-parametric model 608 is judged to determine if it represents a desirable compromise between test data information and a priori knowledge, step 610. If this model is judged to be a desirable compromise in step 610, then constrained non-parametric model 608 is determined to be the final model, step 616, and the system identification procedure is concluded.

If model 608 is judged not to be a desirable compromise in step 610, then the user may change the optimization parameters, such as some or all of the elements of $Q_H \geq 0$ and $Q_{\epsilon^*} \geq 0$, step 612 and return to constrained non-parametric optimization, step 606. This loop may be repeated until the objective function weights are selected in such a way that the final model is satisfactory with respect to the judging in step 610. Alternatively, the user may choose to change the optimization parameters of the initial unconstrained model optimization, such as, for example, adjusting the estimated settling time $N$, step 614 (shown in phantom) and then return to the identification of the initial unconstrained model, step 600.

While the invention has been described with respect to particular embodiments, those of ordinary skill in the art will appreciate variations in structure and substitutions of materials that are within the scope of the present invention.

**Claims**

1. A method of improving an initial parametric model of a system by the incorporation of a priori knowledge of the system, where the initial parametric model of the system is a model including a plurality of parameters based on analysis of a plurality of input signals and a plurality of output signals, the method comprising the steps of:

a) determining a set of constraints corresponding to a set of the plurality of parameters and based on the a priori knowledge; and

b) performing a constrained parametric optimization of the system based on the initial parametric model and the set of constraints determined in step (a) to produce an improved parametric model of the system; wherein the constrained parametric optimization in step (b) does not include the plurality of input signals and the plurality of output signals.

2. A method according to claim 1, wherein step (a) further includes the step of selecting a set of weighting factors corresponding to at least one of the initial parametric model and the set of constraints based on the a priori knowledge.

3. A method according to claim 1 or 2, further comprising the steps of:

c) comparing the modified parametric model created in step (b) to the initial parametric model and the set of constraints to determine whether the modified parametric model is a good compromise between the initial parametric model and the set of constraints; and

d) changing the set of weighting factors corresponding to at least one of the initial parametric model and the set of constraints, and repeating steps (b), (c), and (d) when the modified parametric model is determined in step (c) not to be a good compromise.

4. A method according to any preceding claim, wherein the set of constraints includes a subset of hard constraints and a subset of soft constraints.

5. A method according to any preceding claim, wherein the constrained parametric optimization of step (b) includes a penalty function approach to constraint softening.

6. A method according to any preceding claim, wherein the a priori knowledge of the system includes at least one of:

knowledge determined from first-principles analysis of the system;
knowledge determined from operation of the system; and
knowledge determined from operation of other existing systems having a similar nature.

7. A method according to any preceding claim, wherein the set of constraints includes at least one of;
constraints on an open-loop stability of the system;
constraints on a dynamic behavior of the system; and constraints on a steady-state behavior of the system.

8. A method according to any preceding claim, wherein the initial parametric model is a state-space model.

9. A method of system identification based analysis of a plurality of input signals and a plurality of output signals with the incorporation of a priori knowledge of a system for developing a physically meaningful model of the system, the method comprising the steps of:

a) solving a first parametric model optimization based on the plurality of input signals and the plurality of output signals to create an initial parametric model of the system including a plurality of parameters;

b) determining a set of constraints corresponding to a set of the plurality of parameters based on the a priori knowledge; and

c) performing a constrained parametric optimization of the system based on the initial parametric model and the set of constraints determined in step (b) to produce the physically meaningful model of the system;

wherein the constrained parametric optimization in step (c) does not include the plurality of input signals and the plurality of output signals.

10. A method according to claim 9, wherein step (c) includes the steps of:

c1) comparing the initial parametric model created in step (a) and the set of constraints determined in step (b) to determine whether the initial parametric model is consistent with the set of constraints;

c2) determining the initial parametric model to be the physically meaningful model of the system when the initial parametric model is determined in step (c1) to be consistent with the set of constraints; and

c3) performing a constrained parametric optimization of the system based on only the initial parametric model and the set of constraints to create the physically meaningful model of the system when the initial parametric model is determined in step (c1) not to be consistent with the set of constraints.

11. A method of system identification based analysis of a plurality of input signals and a plurality of output signals with the incorporation of a priori knowledge of a system for developing a physically meaningful model of the system, the method comprising the steps of:

a) solving a first non-parametric model optimization based on the plurality of input signals and the plurality of output signals to create a non-parametric model of the system;
b) approximating the non-parametric model by an initial parametric model of the system including a plurality of parameters;
c) determining a set of constraints corresponding to a set of the plurality of parameters based on the a priori knowledge; and
d) performing a constrained parametric optimization of the system based on the initial parametric model and the set of constraints determined in step (c) to produce the physically meaningful model of the system;

wherein the constrained parametric optimization in step (d) does not include the plurality of input signals and the plurality of output signals.

12. A method according to claim 11, wherein the initial non-parametric model is approximated in step (b) by a state-space model of suitable order to create the initial parametric model of the system.

13. A method of system identification based analysis of a plurality of input signals and a plurality of output signals with the incorporation of a priori knowledge of a system for developing a physically meaningful model of the system, the method comprising the steps of:

a) solving a first non-parametric model optimization based on the plurality of input signals and the plurality of output signals to create an initial non-parametric model of the system including a plurality of model parameters;
b) determining a set of constraints corresponding to a set of the plurality of model parameters based on the a priori knowledge; and
c) performing a constrained non-parametric optimization of the system based on the initial non-parametric model and the set of constraints determined in step (b) to produce the physically meaningful model of the system;

wherein the constrained non-parametric optimization in step (c) does not include the plurality of input signals and the plurality of output signals.

FIG. 1

FIG. 2

EP 1 465 035 A2

RECEIVE
INPUT/OUTPUT
TEST DATA
200

INITIAL
STATE-SPACE
MODEL
300

$$\begin{array}{c|c} A_0 & B_0 \\ \hline C_0 & D_0 \end{array}$$

SIMULATION WITH
UNIT STEP INPUTS
302

STEP RESPONSES

$y_{1,0}^I$     $K_{1,0}^I$

$y_{n_n,0}^{n_y}$     $K_{n_n,0}^{n_y}$

304

308

FINAL MODEL
=
INITIAL MODEL

INITIAL MODEL
CONSISTENT
WITH A PRIORI
KNOWLEDGE
?
306

Y

N

GO TO CONSTRAINED OPTIMIZATION
310

FIG. 3

**FIG. 4**

STATE-SPACE MODEL — 400

$$\left[\begin{array}{c|c} A_0 & B_0 \\ \hline C_0 & D_0 \end{array}\right]$$

— 204

CONSTRAINED OPTIMIZATION — 402

$$\text{MIN} \quad \left\| \left[\begin{array}{c|c} A & B \\ \hline C & D \end{array}\right] - \left[\begin{array}{c|c} A_0 & B_0 \\ \hline C_0 & D_0 \end{array}\right] \right\|_Q^2 + \|\varepsilon\|_Q^2$$

$$\text{SUBJECT TO} \quad f\left[\begin{array}{c|c} A & B \\ \hline C & D \end{array}\right] \leq \varepsilon$$

$$\varepsilon \geq 0$$

SIMULATION WITH UNIT STEP INPUTS — 406

STEP RESPONSES — 408

$y_1^1$ ... $y_{n_n}^{n_y}$

$K_1^1$ ... $K_{n_n}^{n_y}$

INITIAL STATE-SPACE MODEL — 400

$$\left[\begin{array}{c|c} A_0 & B_0 \\ \hline C_0 & D_0 \end{array}\right]$$

CHANGE OPTIMIZATION PARAMETERS — 208

IS FINAL MODEL ACCEPTABLE ? — 206

N

Y

FINAL MODEL — 410

FIG. 5

EP 1 465 035 A2

RECEIVE INPUT/OUTPUT TEST DATA — 200

UNCONSTRAINED NON-PARAMETRIC OPTIMIZATION USING DATA TO DETERMINE INITIAL MODEL — 600

CHANGE OPTIMIZATION PARAMETERS — 614

INTIAL SR MODEL — 604

$$\begin{bmatrix} H_1^0 \\ H_2^0 \\ \vdots \\ H_n^0 \end{bmatrix}$$

602 — INITIAL MODEL CONSISTENT WITH A PRIORI KNOWLEDGE ? — N / Y

FINAL MODEL COMPLETED — 616

CONSTRAINED OPTIMIZATION

$$\mathrm{MIN} \left\| \begin{bmatrix} H_1 \\ H_2 \\ \vdots \\ H_N \end{bmatrix} - \begin{bmatrix} H_1^0 \\ H_2^0 \\ \vdots \\ H_N^0 \end{bmatrix} \right\|_{Q_N}^2 + |\varepsilon|_{Q_\varepsilon}^2$$

SUBJECT TO

$$f(H_1, \cdots, H_N) \le \varepsilon$$

$$\varepsilon \ge 0$$

— 606

SR MODEL

$$\begin{bmatrix} H_1 \\ H_2 \\ \vdots \\ H_n \end{bmatrix}$$

— 608

610 — IS FINAL MODEL ACCEPTABLE ? — Y / N

CHANGE OPTIMIZATION PARAMETERS — 612

FIG. 6